# EUROPEAN PATENT APPLICATION

(11) **EP 2 423 489 A2**
(43) Date of publication of application: **29.02.2012**
(21) Application number: 11173723.5
(22) Date of filing: 13.07.2011
(51) Int. Cl.: F02C 7/228, F02C 9/28, F23R 3/34

(54) **Methods for controlling fuel splits to a gas turbine combustor**

(30) Priority: 27.07.2010 US 844280
(71) Applicant: General Electric Company, Schenectady, NY 12345 (US)
(72) Inventor: Thomas, Stephen Robert, Greenville, SC South Carolina 29615 (US); Childers, Priscilla Graves, Greenville, SC South Carolina 29615 (US); Duraibabu, Vamsi, Greenville, SC South Carolina 29615 (US)
(74) Representative: Bedford, Grant Richard

(57) **Abstract**

Methods for controlling fuel splits to a combustor of a gas turbine are disclosed. The methods may include determining a combustion reference temperature of the gas turbine (202), measuring a biasing parameter of the gas turbine (204), determining at least one fuel split biasing value based on the combustion reference temperature and the biasing parameter (206) and adjusting a nominal fuel split schedule based on the at least one fuel split biasing value (208).

## Description

The present subject matter relates generally to gas turbines and, more particularly, to methods for controlling fuel splits to a gas turbine combustor.

Industrial and power generation gas turbines have turbine control systems (controllers) that monitor and control their operation. These controllers govern the combustion system of the gas turbine and other operational aspects of the turbine. Thus, the controller may execute scheduling algorithms that adjust the fuel flow, combustor fuel splits (i.e., the division of the total fuel flow into gas turbine between the various fuel circuits of the turbine), angle of the inlet guide vanes (IGVs) and other control inputs to ensure safe and efficient operation of the gas turbine. Additionally, turbine controllers may receive input values of measured operating parameters and desired operating settings that, in conjunction with scheduling algorithms, determine settings for control parameters to achieve a desired operation. The values prescribed by scheduling algorithms for the control parameters may cause the turbine to operate at a desired state, such as at a desired output level and/or within defined emissions limits.

Part-load operation of an industrial gas turbine typically involves the controller adjusting a total fuel flow to achieve the desired part-load level and adjusting the compressor IGVs to set the gas turbine cycle match point (i.e., generate the desired output and heat-rate while observing operational boundaries) for the particular part-load level. Additionally, the controller schedules the fuel splits for the combustor to maintain the desired combustion mode (e.g., part-load total fuel flow) and operate the gas turbine within established operational boundaries, such as for combustion dynamics. During part-load operation, the combustor fuel splits can greatly influence the production of harmful emissions, such as carbon-monoxide (CO) and nitrogen-oxide (NOx). Thus, proper scheduling of the fuel splits is often essential in maintaining the gas turbine within emissions compliance.

Combustor fuel splits are typically set according to a nominal fuel split scheduling algorithm, which is driven by a calculated combustion reference temperature (TTRF). As is generally known, values of TTRF are calculated using various measured parameters, such as compressor discharge pressure, turbine exhaust temperature, exhaust air flow, ambient temperature and inlet guide vane angles, as inputs. Due to the dynamic operating conditions of a gas turbine, the turbine may be capable of operating over a wide range of values for any particular operating parameter at any given TTRF value. Thus, to ensure emissions compliant operation at part-load and also to avoid acoustic dynamics and prevent flame out, the nominal fuel split schedule must incorporate certain assumptions regarding the operating conditions/parameters of the gas turbine at each particular TTRF.

For example, it is often the case that combustor fuel splits are scheduled such that a gas turbine remains emissions compliant during operation under worst-case conditions. Thus, it is often assumed that, during part-load operation, the IGVs are retained at a relatively open position (e.g., at an angle greater than about 54 degrees) at all calculated TTRF values. As such, the fuel splits are generally optimized assuming a relatively low fuel-to-air ratio and, thus, fuel flow is apportioned within the combustor in a nominal distribution that is intended to prevent flame out. However, depending on ambient conditions and other operating parameters/conditions, a gas turbine may be capable of operating at part-load over a wide range of IGV angles at any particular TTRF. Thus, when the same fuel splits are applied at a higher fuel-to-air ratio (e.g., when the IGV angle is reduced below 54 degrees), it is often difficult to maintain the gas turbine within operational boundaries. In particular, the nominal fuel distribution at elevated fuel-to-air ratios can result in heightened NOx emissions, undesirable acoustic dynamics and other problematic conditions.

Accordingly, methods for controlling fuel splits to a gas turbine combustor that account for varying operating parameters would be welcomed in the technology.

Various aspects, embodiments and advantages of the invention will be set forth in part in the following description, or may be clear from the description, or may be learned through practice of the invention.

In one aspect, methods are disclosed for controlling fuel splits to a combustor of a gas turbine. The methods may generally include determining a combustion reference temperature of the gas turbine, measuring a biasing parameter of the gas turbine, determining at least one fuel split biasing value based on the combustion reference temperature and the biasing parameter and adjusting a nominal fuel split schedule of the gas turbine based on the at least one fuel split biasing value.

In another aspect, further methods are disclosed for controlling fuel splits to a combustor of a gas turbine. The methods may generally include determining a combustion reference temperature of the gas turbine, measuring an inlet guide vane angle of the gas turbine, measuring at least one secondary biasing parameter of the gas turbine, determining at least one fuel split biasing value based on the combustion reference temperature, the inlet guide vane angle and the at least one secondary biasing parameter and adjusting a nominal fuel split schedule of the gas turbine based on the at least one fuel split biasing value.

In a further aspect, additional methods are disclosed controlling fuel splits to a combustor of a gas turbine. The methods may generally include, determining a combustion reference temperature of the gas turbine, measuring a biasing parameter of the gas turbine, wherein the biasing parameter is a parameter selected from the group consisting of inlet guide vane angle, compressor discharge pressure, compressor pressure ratio, compressor discharge temperature, ambient temperature, compressor inlet air mass flow, gaseous fuel flow and liquid fuel flow, determining at least one fuel split biasing value based on the combustion reference temperature and the biasing parameter and adjusting a nominal fuel split schedule based on the at least one fuel split biasing value.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a schematic depiction of a gas turbine;
FIG. 2 illustrates one embodiment of a method for controlling fuel splits to a combustor of a gas turbine in accordance with aspects of the present subject matter;
FIG. 3 illustrates one embodiment of a lookup table for determining a fuel split biasing value for a particular fuel circuit of a gas turbine in accordance with aspects of the present subject matter;
FIG. 4 illustrates another embodiment of a lookup table for determining a fuel split biasing value for a different fuel circuit of a gas turbine in accordance with aspects of the present subject matter; and
FIG. 5 illustrates one embodiment of a nominal fuel split schedule for a gas turbine.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is generally directed to methods for controlling fuel splits to a combustor of a gas turbine. In particular, methods are disclosed that permit a nominal fuel split schedule to be supplemented or adjusted to account for variations in operating parameters of a gas turbine during part-load operation. For example, the present subject matter provides that the combustor fuel splits among the various fuel circuits of a gas turbine may be adjusted simultaneously in response to changes or variations in the turbine's operating parameters. As such, various advantages may be provided to a gas turbine, such as reduced emissions of NOx and CO, reduced acoustic dynamics and lower turndown capability.

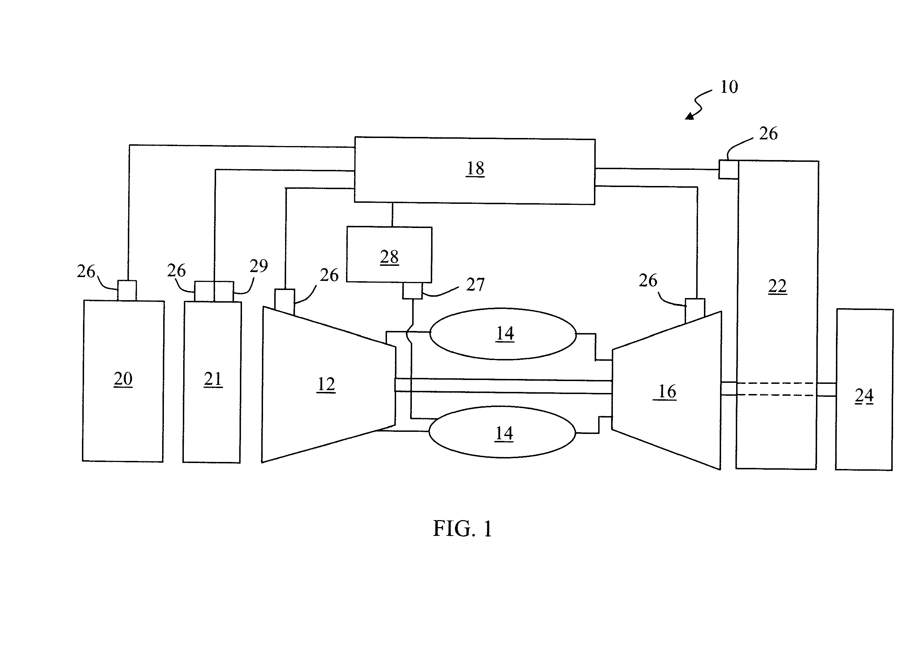

Referring to the drawings, FIG. 1 illustrates a schematic view of a gas turbine 10 having a compressor 12, a plurality of combustors 14, a turbine 16 drivingly coupled to the compressor 14, and a turbine control system 18 (hereinafter referred to as the "controller"). In one embodiment, the combustors 14 may be part of a Dry-Low NOx (DLN) combustion system and the controller 18 may be programmed and/or modified to control the DLN combustion system. An inlet duct 20 to the compressor 14 feeds ambient air and possibly injected water into the compressor 14. A first stage of the compressor 14 may include a plurality of circumferentially arranged cantilevered inlet guide vanes 21 (IGVs). The IGVs 21 are coupled to an actuator 29 and may be actuated by the controller 18 to regulate airflow flowing through the compressor 14. For example, during base-load operation, the IGVs may be actuated to a fully open position, such as at an angle of approximately 90 degrees, to allow maximum airflow through the compressor 14. However, during part-load operation, the IGV angle may be set to a more closed position, such as at an angle of less than about 54 degrees, to reduce airflow through the compressor 14. An exhaust duct 22 of the gas turbine 10 directs combustion gases from the outlet of the turbine 16 through, for example, emission control and sound absorbing devices. Additionally, the turbine 16 may drive a generator 24 that produces electrical power.

The gas turbine 10 may also include a plurality of fuel circuits configured to deliver fuel to the various fuel nozzles within the combustors 14. For example, in one embodiment, a gas turbine 10 may include four fuel circuits, with three fuel circuits delivering fuel to the various premix fuel nozzle assemblies (e.g., PM1, PM2 and PM3 fuel circuits) and a diffusion fuel circuit delivering fuel to various fuel nozzles via diffusion fuel passages (D5 fuel circuit). It should be appreciated, however, that a gas turbine 10 may include any number and type of fuel circuits depending on the configuration of the gas turbine 10 and, thus, need not have the same number and type fuel circuits described above. Additionally, depending on the particular mode at which a gas turbine 10 is operating, it should be appreciated that fuel may not be supplied through each of the fuel circuits. For example, during part-load operation, fuel may only be delivered to the combustors 14 through the PM1, PM2 and PM3 fuel circuits.

The operation of the gas turbine 10 may be monitored by several sensors 26 detecting various conditions of the turbine, generator and ambient environment. For example, temperature sensors 26 may monitor ambient temperature surrounding the gas turbine, compressor discharge temperature, turbine exhaust gas temperature, and other temperature measurements of the working fluid and combustion gases through the gas turbine. Pressure sensors 26 may monitor ambient pressure and static and dynamic pressure levels at the compressor inlet and outlet, turbine exhaust, and at other locations in the gas stream through the gas turbine. Humidity sensors 26 (e.g., wet and dry bulb thermometers) measure ambient humidity at the inlet duct of the compressor. One or more inlet guide vane sensors 26 monitor or identify the angle of the IGVs 21. The sensors 26 may also comprise flow sensors, speed sensors, flame detector sensors, valve position sensors, or the like that sense various parameters pertinent to the operation of gas turbine 10. As used herein, "parameters" refer to items that can be used to define the operating conditions of a gas turbine such as, but not limited to, temperatures, pressures, and gas flows at defined locations in the gas turbine. Some parameters may be measured since they are capable of being sensed and may be directly known. Other parameters may be estimated or calculated using the measured parameters. The measured and calculated parameters may generally be used to represent a given turbine operating condition.

A fuel controller 28 may regulate the fuel flowing from a fuel supply to the combustor 14. The fuel controller 28 may also select the type of fuel for the combustor. Additionally, the fuel controller 28 may also generate and implement fuel split commands that determine the portion of fuel flowing to the various fuel circuits of the combustor 12. Generally, the fuel split commands correspond to a fuel split percentage for each fuel circuit, which defines what percentage of the total amount of fuel delivered to the combustor is supplied through a particular fuel circuit (e.g., the percentage of the total fuel flow being supplied to the PM1, PM2 and PM3 fuel circuits). It should be appreciated that the fuel controller 28 may comprise a separate unit or may be a component of the turbine controller 18.

The controller 18 may generally be any turbine control system known in the art that permits a gas turbine 10 to be controlled and/or operated as described herein. For example, the controller 18 may comprise a General Electric SPEEDTRONIC Gas Turbine Control System, such as is described in Rowen, W. I., "SPEEDTRONIC Mark V Gas Turbine Control System", GE-3658D, published by GE Industrial & Power Systems of Schenectady, N.Y. Generally, the controller 18 may comprise any computer system having a processor(s) that executes programs, such as computer readable instructions stored in the controller's memory, to control the operation of the gas turbine 10 using sensor inputs and instructions from human operators. The programs executed by the controller 18 may include scheduling algorithms for regulating fuel flow to the combustor 14. The commands generated by the controller 18 may also cause actuators on the gas turbine to, for example: adjust valves (actuator 27) between the fuel supply and combustors 14 that regulate the flow, fuel splits and type of fuel flowing to the combustors 14; adjust the angle of the inlet guide vanes 21 (actuator 29) on the compressor 12, and activate other control settings on the gas turbine.

The scheduling algorithms may generally enable the controller 18 to maintain, for example, the NOx and CO emissions in the turbine exhaust to within certain predefined emission limits, and to maintain the combustor firing temperature to within predefined temperature limits. Thus, it should be appreciated that the scheduling algorithms may use various operating parameters as inputs. The controller 18 may then apply the algorithms to schedule the gas turbine 10, for example, to set desired turbine exhaust temperatures and combustor fuel splits, so as to satisfy performance objectives while complying with operational boundaries of the turbine.

With regard to fuel split scheduling algorithms, a predetermined or nominal fuel split schedule is generally applied by the controller 18 to maintain the desired combustion mode while observing other operability boundaries, such as combustion dynamics and emissions. This nominal fuel split schedule is typically driven solely by a calculated combustion reference temperature (TTRF) and, thus, may not completely account for the variability in operating parameters of the gas turbine. For example, as indicated above, a gas turbine may operate within a wide range of IGV angles for any given TTRF. As such, the nominal fuel split percentages for each fuel circuit may not be properly scheduled to accommodate the wide range of fuel-to-air ratios that may be associated with such varied IGV angles.

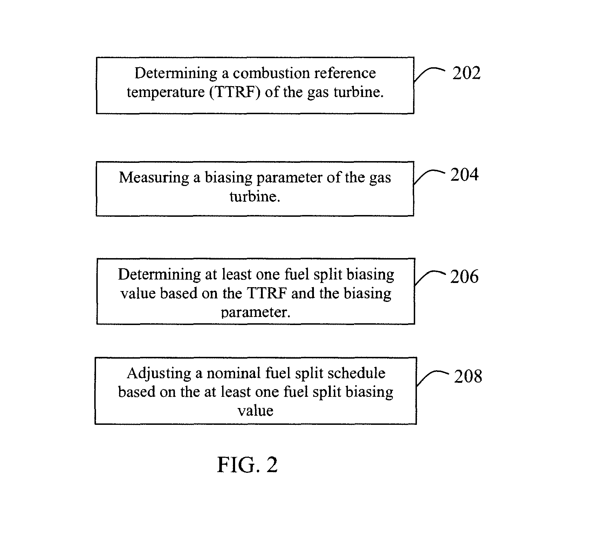

Referring now to FIG. 2, one embodiment of a method for controlling fuel splits to a combustor 14 of a gas turbine 10 is illustrated. Generally, the method includes determining a combustion reference temperature (TTRF) of the gas turbine 202, measuring a biasing parameter of the gas turbine 204, determining at least one fuel split biasing value based on the TTRF and the biasing parameter 206, and adjusting a nominal fuel split schedule based on the fuel split biasing value 208. Thus, the disclosed method may permit the nominal fuel split schedule of a gas turbine 10 to be supplemented or adjusted in order to take into account the variability of one or more biasing parameters, such as the IGV angle, of the gas turbine. As used herein, "biasing parameters" and "secondary biasing parameters" may include parameters such as IGV angle, compressor discharge pressure, compressor pressure ratio, compressor inlet temperature, compressor discharge temperature, ambient temperature, compressor inlet air mass flow, gaseous fuel flow, liquid fuel flow and other similar parameters that may be used to define or otherwise evaluate gas turbine operation and/or performance. Additionally, it should be appreciated that, although the present subject matter will be generally described below in reference to using IGV angles as the basis for adjusting the nominal fuel split schedule, any biasing parameter may be utilized within the scope of the present subject matter as the basis for supplementing or augmenting the nominal fuel split schedule.

As shown in FIG. 2, in 202, the TTRF of the gas turbine is determined. In general, values of TTRF are calculated based on available data representing various measured operating parameters and constants of a gas turbine. For example, measured operating parameters, such as compressor discharge pressure, turbine exhaust temperature, exhaust airflow, ambient temperature and inlet guide vane angle, may be used as inputs for the calculation. The mathematical model correlating such operating parameters and any other required parameters/conditions may generally be programmed into the memory of the controller 18. As such, values of TTRF may be calculated, in real-time, automatically and continuously by the controller 18 during operation of the gas turbine 10. It should be readily appreciated by those of ordinary skill in the art that the development of the mathematical model for determining values of TTRF generally includes the consideration of a significant number of aero-thermal, non-linear equations correlating various operating parameters and conditions of a gas turbine. Additionally, the model may generally vary from gas turbine to gas turbine. Thus, it should be apparent to those of ordinary skill in the art that, generally, any mathematical model known in the art for determining values of TTRF for a particular gas turbine 10 may be used without departing from the scope of the present subject matter.

In 204, a biasing parameter of the gas turbine is measured or otherwise determined. As indicated above, various sensors 26 may be installed throughout a gas turbine 10 and may be used to measure the various operating parameters of the gas turbine 10. Thus, it should be appreciated that the biasing parameters of the present subject matter may be measured utilizing such sensors 26. For example, in a particular embodiment, the IGV angle of the compressor 14 may be measured using one or more inlet guide vane sensors 26 disposed on, within, or otherwise adjacent to the IGVs 21. In such an embodiment, the inlet guide vane sensor(s) 26 may be communicatively coupled to the controller 18 via a wired or wireless connection. Thus, the IGV angle may be continuously and automatically measured by and stored within the controller 18 during operation of the gas turbine 10.

Referring still to FIG. 2, in 206, at least one fuel split biasing value is determined based on the TTRF and the measured biasing parameter. In general, the fuel split biasing value of the present subject matter may comprise any number, factor, percentage or other biasing amount that may be applied against the fuel split percentages of the nominal fuel split schedule in order to achieve and/or maintain desired operating conditions for a gas turbine in light of variations in the measured biasing parameter. For example, in a particular embodiment, the fuel split biasing value may be based on a calculated value of TTRF and a measured IGV angle for a particular gas turbine 10. Thus, the fuel split biasing value may be utilized to adjust the nominal fuel split schedule such that the fuel distribution within the gas turbine may be optimized based on the measured IGV angle.

Generally, the fuel split biasing values may vary from fuel circuit to fuel circuit and from gas turbine to gas turbine. In one embodiment, a plurality of unique fuel split biasing values may be associated with each fuel circuit of a gas turbine, with each fuel split biasing value being determined based on a particular TTRF and a particular biasing parameter measurement. Thus, it should be appreciated by those of ordinary skill in the art that experimental testing or mathematical modeling may be used to identify the various fuel split biasing values needed to supplement the nominal fuel split schedule for any particular gas turbine 10. For instance, experimental testing may be conducted in order to determine the fuel split percentages at which the most desirable operating conditions can be obtained based on variations of one or more of the biasing parameters. The experimentally obtained fuel split percentages may then be correlated to the fuel split percentages of the nominal fuel split schedule to identify fuel split biasing values for each fuel circuit of the gas turbine. Alternatively, a mathematical expression or series of expressions may be developed that, based on operating parameters, gas turbine constants and other operating conditions of a gas turbine, permits the most desirable fuel split percentages to be predicted or calculated for a given TTRF and a given biasing parameter measurement such that the fuel split biasing values for each fuel circuit may be determined.

In one embodiment, the fuel split biasing values associated with a particular gas turbine 10 may be provided in a lookup table(s) to permit such values to be quickly referenced and determined. In particular, the fuel split biasing values of the present subject matter may be defined in one or more lookup tables that use TTRF values and biasing parameter measurements as reference parameters. For example, in a specific embodiment, one or more lookup tables may chart the fuel split biasing values for a gas turbine 10 against various TTRF values and various IGV angles. In such an embodiment, it should be appreciated that a unique lookup table may be provided for each fuel circuit of the gas turbine 10. Additionally, it should be appreciated that, in one embodiment, the lookup table(s) may be programmed into or otherwise stored within the controller 18 of the gas turbine 10. As such, the controller 18 may automatically determine and apply the fuel split biasing values by referencing the stored lookup table(s), such as by interpolating the values stored in the lookup tables(s). Alternatively, lookup tables may be provided to power plant operators, maintenance workers and the like such that the fuel split biasing values may be determined in the field.

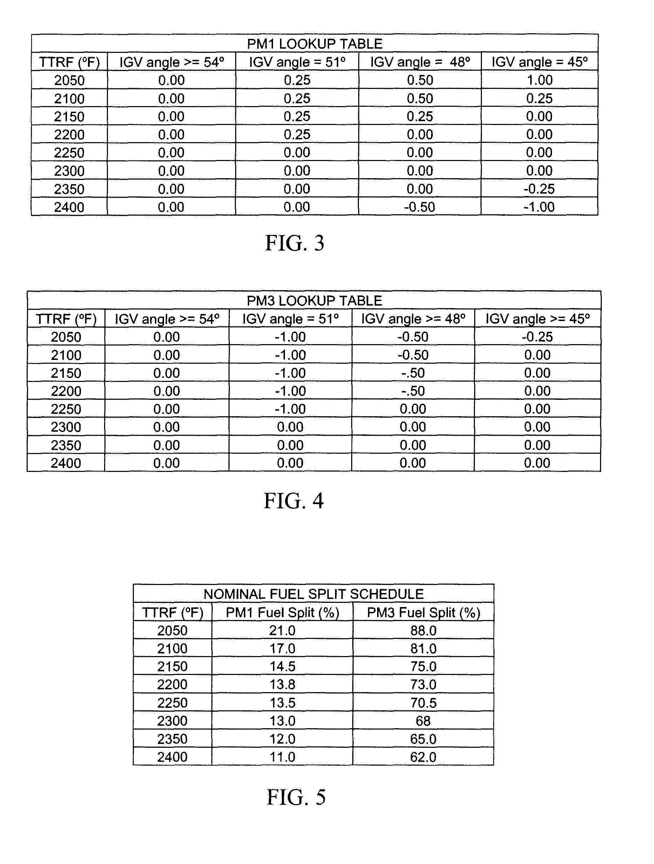

Example embodiments of lookup tables for two fuel circuits, the PM1 and PM3 fuel circuits, are illustrated in FIGS. 3 and 4, respectively. As indicated above, the fuel split biasing values may generally vary from fuel circuit to fuel circuit and from gas turbine to gas turbine. Specifically, the values shown in the tables may vary significantly depending on the particular type of gas turbine being used and the way in which a particular gas turbine is being operated. Thus, it should be appreciated that the illustrated lookup tables are provided only as illustrative examples of lookup tables that may be utilized within the scope of the present subject matter. As shown in FIGS. 3 and 4, fuel split biasing values for each fuel circuit may be charted across a range of TTRF values and IGV angles. Thus, for example, at a TTRF of 2200 degrees Fahrenheit and an IGV angle of 51 degrees, the fuel split biasing value for the PM1 fuel circuit is 0.25, while the fuel split biasing value for the PM3 fuel circuit is -1.00. As another example, at a TTRF of 2400 degrees Fahrenheit and an IGV angle of 48 degrees, the fuel split biasing value for the PM1 fuel circuit is -0.50, while the fuel split biasing value for the PM3 fuel circuit is 0.00 (i.e., the nominal fuel split schedule need not be adjusted for the PM3 circuit at such operating conditions). Of course, it should be appreciated by those of ordinary skill in the art that a more detailed lookup table(s) may be developed to include TTRF values and IGV angles in smaller increments. However, in the event that the calculated TTRF and measured IGV angle do not correspond to values listed in the table(s), the fuel split biasing value may be determined by linearly interpolating between the listed values.

Additionally, as shown in FIGS. 3 and 4, the fuel split biasing values comprise a percentage change of the total fuel flowing into the combustors 14. Thus, the fuel split biasing values may simply be added (or subtracted in the case of a negative fuel split biasing value) to adjust the nominal fuel split percentages for each fuel circuit. However, it should be appreciated that the fuel split biasing values need not correspond to a percentage change of the total fuel, but may generally comprise any value that may be used to adjust the nominal fuel split schedule of a gas turbine in order to enhance the operating conditions of a gas turbine.

In an alternative embodiment, a correlated mathematical function may be provided instead of, or in addition to, the lookup table(s) to enable the fuel split biasing values to be determined. In particular, a mathematical expression or series of expressions may be developed that relates the fuel split biasing values for each fuel circuit to both the TTRF values and the biasing parameter measurements being used as a basis to adjust the nominal fuel split schedule. For example, a correlated mathematical function may be developed that utilizes TTRF values and IGV angles as input variables. Additionally, in one embodiment, this mathematical function may be programmed into or otherwise stored within the memory of the controller 18. As such, the controller 18 may automatically input a calculated TTRF value and a measured IGV angle into the correlated mathematical function so as to determine the fuel split biasing value for a particular fuel circuit. Alternatively, the mathematical function may be provided to power plant operators, maintenance workers and the like such that fuel split biasing values for a gas turbine may be determined in the field. It should be appreciated that such a mathematical function may be developed on the basis of individual field tests, fleet experience, physics-based analytical correlations or using various other suitable methods.

Referring back to FIG. 2, in 208, the nominal fuel split schedule is adjusted based on the at least one fuel split biasing value. In particular, the nominal fuel split schedule may be adjusted to account for any variations in the basing parameter(s) being used as the basis for determining the fuel split biasing value. For example, in one embodiment, the nominal combustor fuel splits may be scheduled assuming that the IGVs 21 are set at an angle greater than about 54 degrees in order to maintain the gas turbine 10 within emissions compliance during part-load operation. However, for a given value of TTRF, a gas turbine may be capable of operating at angles less than 54 degrees, such as from about 54 degrees to about 45 degrees (as shown in FIGS. 3 and 4). Thus, the nominal fuel split schedule may be adjusted in order to maintain desirable operating conditions for the gas turbine despite such varied operating parameter(s).

An example of a nominal fuel split schedule is illustrated in FIG. 5. It should be appreciated that the depicted schedule is provided for illustrative purposes only and that the nominal fuel split schedule will generally vary from gas turbine to gas turbine. As shown, nominal fuel split percentages are charted for the PM1 and PM3 fuel circuits at various values of TTRF. Thus, for example, at a TTRF of 2200 degrees Fahrenheit, 14% of the total fuel flow is scheduled to be supplied through the PM1 circuit and 73% of the remaining fuel flow (approximately 63% of the total fuel flow) is scheduled to be supplied through the PM3 circuit. Assuming that fuel is being supplied to the combustor through the three premix fuel circuits, the remainder (approximately 23%) of the total fuel flow would be supplied through the PM2 circuit. Additionally, in one embodiment described above, the fuel split biasing value for each fuel circuit may be determined by locating the appropriate TTRF value and IGV angle in one or more lookup tables. Thus, at a TTRF of 2200 degrees Fahrenheit and assuming an IGV angle of 51 degrees, the fuel split biasing value for the PM1 fuel circuit is 0.25 (FIG. 3), while the fuel split biasing value for the PM3 fuel circuit is -1.00 (FIG. 4). Thus, in an embodiment in which the fuel split biasing values correspond to a percent change of the overall fuel flow, the nominal fuel split schedule may be adjusted by summing each nominal fuel split percentage with the corresponding fuel split biasing value. Accordingly, the adjusted fuel split percentage for the PM1 fuel circuit may equal 14% + 0.25% or 14.25%. Similarly, the adjusted fuel split percentage for the PM3 fuel circuit may equal 73% + (-1.00%) or 72% of the remaining fuel flow The adjusted fuel split percentage for the PM2 fuel circuit would, thus, be equal to the remainder of the fuel flow (i.e., approximately 24 % of the total fuel flow). Of course, it should be appreciated that similar adjustments may be made to the nominal fuel split percentages utilizing fuel split biasing values based on various other biasing parameters of the gas turbine.

It should also be appreciated that, in alternative embodiments of the present subject matter, multiple biasing parameters may be used as the basis for adjusting the nominal fuel split schedule. For example, in one embodiment, the nominal fuel split schedule may be adjusted or supplemented using both IGV angle and a secondary biasing parameter. In such an embodiment, the fuel split biasing value may be determined based on the calculated TTRF and the measured values for both the IGV angle and the secondary biasing parameter. For example, multiple lookup tables may be provided that correlate both the IGV angle and the secondary biasing parameter to the desired fuel split biasing values. Alternatively, one or more correlated mathematical functions may be developed that relates IGV angle and the secondary biasing parameter to the desired fuel split percentages such that the fuel split biasing values may be determined for each fuel circuit. After such fuel split biasing values are determined, the nominal fuel split schedule may then be adjusted in order to account for the variations in both the IGV angle and the secondary biasing parameter.

It should be further appreciated that, in alternative embodiments of the present subject matter, a T39 parameter (combustor exit temperature) may be used as an alternative to TTRF as one of the reference parameters for biasing the nominal fuel split schedule. For example, the T39 parameter may be utilized in embodiments in which an All Load Cycle Control or other model-based control application is being utilized by the turbine controller. Those of ordinary skill in the art should appreciate that an All Load Cycle Control is a type of model-based control system that uses a gas turbine cycle deck model to calculate a T39 value. In particular, the cycle model implements direct boundary control as opposed to the schedule-based control (i.e., the TTRF-based splits).

One technical effect of certain of the present matter is improved performance and/or operation of a gas turbine. In particular, by adjusting the nominal fuel split schedule to take into account various biasing parameters and conditions, the performance and/or operation of a gas turbine may be enhanced. For example, proper biasing of the fuel split schedule can reduce emissions of NOx and CO, reduce acoustic dynamics and provide a lower turndown capability for a gas turbine.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A method for controlling fuel splits to a combustor of a gas turbine, the method comprising:
   determining a combustion reference temperature of the gas turbine;
   measuring an inlet guide vane angle of the gas turbine;
   determining at least one fuel split biasing value based on the combustion reference temperature and the inlet guide vane angle; and
   adjusting a nominal fuel split schedule of the gas turbine based on the at least one fuel split biasing value.
2. The method of clause 1, wherein determining the at least one fuel split biasing value comprises locating the combustion reference temperature and the inlet guide vane angle in at least one lookup table.
3. The method of any preceding clause, wherein the at least one lookup table is stored within a controller of the gas turbine such that the at least one fuel split biasing value is determined automatically.
4. The method of any preceding clause, wherein determining the at least one fuel split biasing value comprises inputting the combustion reference temperature and the inlet guide vane angle into at least one correlated mathematical function.
5. The method of any preceding clause, wherein the at least one correlated mathematical function is stored within a controller of the gas turbine such that the at least one fuel split biasing value is determined automatically.
6. The method of any preceding clause, further comprising measuring at least one secondary biasing parameter of the gas turbine, wherein the at least one fuel split biasing value is determined based on the combustion reference temperature, the inlet guide vane angle and the at least one secondary biasing parameter.
7. The method of any preceding clause, wherein determining the at least one fuel split biasing value comprises locating the combustion reference temperature, the inlet guide vane angle, and the at least one secondary biasing parameter in at least one lookup table or inputting the combustion reference temperature, the inlet guide vane angle and the secondary biasing parameter into at least one correlated mathematical function.
8. The method of any preceding clause, wherein the at least one secondary biasing parameter comprises at least one of compressor discharge pressure, compressor inlet temperature, compressor pressure ratio, compressor discharge temperature, ambient temperature, compressor inlet air mass flow, gaseous fuel flow and liquid fuel flow.
9. The method of any preceding clause, wherein the at least one fuel split biasing value comprises a percentage change of a total fuel flow into the combustor, the nominal fuel split schedule being adjusted by summing the at least one fuel split biasing value with at least one fuel split percentage of the nominal fuel split schedule.
10. The method of any preceding clause, wherein adjusting the nominal fuel split schedule comprises automatically adjusting the nominal fuel split schedule with a controller of the gas turbine.
11. The method of any preceding clause, wherein measuring the inlet guide vane angle comprises automatically measuring the inlet guide vane angle using a sensor in communication with a controller of the gas turbine.
12. The method of any preceding clause, wherein determining the combustion reference temperature comprises automatically determining the combustion reference temperature with a controller of the gas turbine.
13. A method for controlling fuel splits to a combustor of a gas turbine, the method comprising:
   determining a combustion reference temperature of the gas turbine;
   measuring an inlet guide vane angle of the gas turbine;
   measuring at least one secondary biasing parameter of the gas turbine;
   determining at least one fuel split biasing value based on the combustion reference temperature, the inlet guide vane angle and the at least one secondary biasing parameter; and
   adjusting a nominal fuel split schedule of the gas turbine based on the at least one fuel split biasing value.
14. The method of any preceding clause, wherein determining the at least one fuel split biasing value comprises automatically determining the at least one fuel split biasing value by locating the combustion reference temperature, the inlet guide vane angle and the secondary biasing parameter in at least one lookup table, wherein the at least one lookup table is stored within a controller of the gas turbine.
15. The method of any preceding clause, wherein determining the at least one fuel split biasing value comprises automatically determining the at least one fuel split biasing value by inputting the combustion reference temperature, the inlet guide vane angle and the secondary biasing parameter into at least one correlated mathematical function, wherein the at least one correlated mathematical function is stored within a controller of the gas turbine.
16. The method of any preceding clause, wherein the at least one secondary biasing parameter comprises at least one of compressor discharge pressure, compressor inlet temperature, compressor pressure ratio, compressor discharge temperature, ambient temperature, compressor inlet air mass flow, gaseous fuel flow and liquid fuel flow.
17. A method for controlling fuel splits to a combustor of a gas turbine, the method comprising:
   determining a combustion reference temperature of the gas turbine;
   measuring a biasing parameter of the gas turbine, wherein the biasing parameter is a parameter selected from the group consisting of inlet guide vane angle, compressor discharge pressure, compressor pressure ratio, compressor discharge temperature, ambient temperature, compressor inlet air mass flow, gaseous fuel flow and liquid fuel flow;
   determining at least one fuel split biasing value based on the combustion reference temperature and the biasing parameter; and
   adjusting a nominal fuel split schedule based on the at least one fuel split biasing value.
18. The method of any preceding clause, wherein determining the at least one fuel split biasing value comprises locating the combustion reference temperature and the biasing parameter in at least one lookup table.
19. The method of any preceding clause, wherein determining the at least one fuel split biasing value comprises inputting the combustion reference temperature and the biasing parameter into a correlated mathematical function.
20. The method of any preceding clause, further comprising measuring at least one secondary biasing parameter of the gas turbine, wherein the at least one fuel split biasing value is determined based on the combustion reference temperature, the biasing parameter and the at least one secondary biasing parameter.

## Claims

1. A method for controlling fuel splits to a combustor (14) of a gas turbine (10), the method comprising:
determining a combustion reference temperature of the gas turbine (10);
measuring an inlet guide vane angle of the gas turbine (10);
determining at least one fuel split biasing value based on the combustion reference temperature and the inlet guide vane angle; and
adjusting a nominal fuel split schedule of the gas turbine (10) based on the at least one fuel split biasing value.

2. The method of claim 1, wherein determining the at least one fuel split biasing value comprises locating the combustion reference temperature and the inlet guide vane angle in at least one lookup table.

3. The method of claim 2, wherein the at least one lookup table is stored within a controller (18) of the gas turbine (10) such that the at least one fuel split biasing value is determined automatically.

4. The method of any preceding claim, wherein determining the at least one fuel split biasing value comprises inputting the combustion reference temperature and the inlet guide vane angle into at least one correlated mathematical function.

5. The method of claim 4, wherein the at least one correlated mathematical function is stored within a controller (18) of the gas turbine (10) such that the at least one fuel split biasing value is determined automatically.

6. The method of any preceding claim, further comprising measuring at least one secondary biasing parameter of the gas turbine (10), wherein the at least one fuel split biasing value is determined based on the combustion reference temperature, the inlet guide vane angle and the at least one secondary biasing parameter.

7. The method of any preceding claim, wherein determining the at least one fuel split biasing value comprises locating the combustion reference temperature, the inlet guide vane angle, and the at least one secondary biasing parameter in at least one lookup table or inputting the combustion reference temperature, the inlet guide vane angle and the secondary biasing parameter into at least one correlated mathematical function.

8. The method of any preceding claim, wherein the at least one secondary biasing parameter comprises at least one of compressor discharge pressure, compressor inlet temperature, compressor pressure ratio, compressor discharge temperature, ambient temperature, compressor inlet air mass flow, gaseous fuel flow and liquid fuel flow.

9. The method of any preceding claim, wherein the at least one fuel split biasing value comprises a percentage change of a total fuel flow into the combustor (14), the nominal fuel split schedule being adjusted by summing the at least one fuel split biasing value with at least one fuel split percentage of the nominal fuel split schedule.

10. The method of any preceding claim, wherein adjusting the nominal fuel split schedule comprises automatically adjusting the nominal fuel split schedule with a controller (18) of the gas turbine (10).

11. The method of any preceding claim, wherein measuring the inlet guide vane angle comprises automatically measuring the inlet guide vane angle using a sensor (26) in communication with a controller (18) of the gas turbine (10).

12. A method for controlling fuel splits to a combustor (14) of a gas turbine (10), the method comprising:
determining a combustion reference temperature of the gas turbine (10);
measuring an inlet guide vane angle of the gas turbine (10);
measuring at least one secondary biasing parameter of the gas turbine (10);
determining at least one fuel split biasing value based on the combustion reference temperature, the inlet guide vane angle and the at least one secondary biasing parameter; and
adjusting a nominal fuel split schedule of the gas turbine (10) based on the at least one fuel split biasing value.

13. The method of claim 12, wherein determining the at least one fuel split biasing value comprises automatically determining the at least one fuel split biasing value by locating the combustion reference temperature, the inlet guide vane angle and the secondary biasing parameter in at least one lookup table, wherein the at least one lookup table is stored within a controller (18) of the gas turbine (10).

14. The method of claim 12 or claim 13, wherein determining the at least one fuel split biasing value comprises automatically determining the at least one fuel split biasing value by inputting the combustion reference temperature, the inlet guide vane angle and the secondary biasing parameter into at least one correlated mathematical function, wherein the at least one correlated mathematical function is stored within a controller (18) of the gas turbine (10).

15. The method of any of claims 12 to 14, wherein the at least one secondary biasing parameter comprises at least one of compressor discharge pressure, compressor inlet temperature, compressor pressure ratio, compressor discharge temperature, ambient temperature, compressor inlet air mass flow, gaseous fuel flow and liquid fuel flow.
